# EUROPEAN PATENT SPECIFICATION

(11) **EP 2 564 913 B1**
(45) Date of publication and mention of the grant of the patent: **11.05.2016**
(21) Application number: 12182108.6
(22) Date of filing: 29.08.2012
(51) Int. Cl.: B01D 33/21, B01D 33/72, D21C 9/18, B01D 33/46, D21D 5/04

(54) **Disc filter**
Scheibenfilter
Filtre à disque

(30) Priority: 02.09.2011 FI 20115861
(43) Date of publication of application: 06.03.2013
(73) Proprietor: Valmet Technologies, Inc., 02150 Espoo (FI)
(72) Inventor: Riivari, Petteri, 49540 Metsäkylä (FI); Virtanen, Jani, 33900 Tampere (FI)
(74) Representative: Kolster Oy Ab

(56) References cited:
- EP-A2- 0 686 419
- WO-A1-96/25218

## Description

### FIELD OF THE INVENTION

The invention relates to a disc filter comprising a supply box and a vat, whereby fibre pulp suspension to be supplied into the disc filter is arranged to be supplied to the vat through the supply box.

Further the invention relates to a method for supplying fibre pulp suspension into a disc filter comprising a supply box and a vat, in which method the fibre pulp suspension is supplied to the vat through the supply box.

### BACKGROUND OF THE INVENTION

Disc filters are generally used for recovering of fibres and purification of water in white water systems of paper and board machines. A disc filter comprises a rotatable axle and, in a longitudinal direction of the axle, several sequentially disposed filters having a shape of disc, i.e. filter discs. In the direction of the periphery of the disc filter the filter discs are composed of filter sectors secured to the axle adjacent to each other, the filter sectors being filter structures that are separate from each other and surrounded by supporting edges.

Pulpcontaining fibres, i.e. fibre pulp suspension, is supplied to the disc filter typically in such a way that the fibre pulp suspension is supplied through a supply box to a vat located at a lower part of the disc filter. During the operation of the disc filter a negative pressure or a suction effect acting on the fibre pulp suspension is created through the filter sectors that are below the surface of the fibre pulp suspension. The suction effect acts on the fibre pulp suspension in such a way that it sucks or draws the fibre pulp suspension through the surface of the filter sector, whereby a fibre layer builds up on the surface of the filter sector. After that, due to the suction effect, water contained in the fibre pulp suspension infiltrates through the fibre layer and forms a filtrate inside the filter sector, the particles contained in the fibre pulp suspension remaining on the fibre layer. The fibre layer thus forms a filter which removes particles from the water flowing through the fibre layer. The infiltrate formed inside the filter sector flows forward to a filtrate channel inside the axle and further out of the disc filter. US-publications 4,136,028 and 5,792,352 as well as WO-publication 96/25218 A1 disclose some examples of disc filters.

In a known disc filter the fibre pulp suspension is supplied from the supply box to the vat over a wall between the supply box and the vat so that the fibre pulp suspension supplied from the supply box falls against the surface of the fibre pulp suspension in the vat. Due to this fall a lot of extra air is formed in the fibre pulp suspension in the vat.

However, the air content of the fibre pulp suspension in the vat is an important factor when considering the capacity or operational efficiency of the disc filter. For example, if there is an increase of 1% in the air content of the fibre pulp suspension, the capacity of the disc filter should be increased by 10% for maintaining the same output. Therefore any decrease in the air content of the fibre pulp suspension in the vat would have a remarkable positive effect on the operational efficiency of the disc filter.

### BRIEF DESCRIPTION OF THE INVENTION

An object of the present invention is to provide a novel disc filter, which can provide a reduced air content of the fibre pulp suspension in the vat.

The disc filter according to the invention is characterized by the features of independent claim 1.

A method according to the invention is characterized by the features of independent claim 9.

A disc filter comprises a supply box and a vat so that fibre pulp suspension to be supplied into the disc filter is arranged to be supplied to the vat through the supply box. The disc filter further comprises at least one flow control element to act on at least part of the flow of the fibre pulp suspension to be supplied through the supply box to the vat of the disc filter. By the flow control element the flow of the fibre pulp suspension to be supplied to the vat of the disc filter may be acted on so that the removal of air from the suspension becomes more effective or the supply of the suspension to the vat does not create as much air in the suspension as previously. The flow control element is a floating flow control element. The floating ability of the flow control element provides an easy way for the flow control element to change its position or alignment when the level of the surface of the fibre pulp suspension or the density, and thereby the flow behavior of the suspension, varies.

According to an embodiment, the flow control element is arranged to act on the direction of at least part of the flow of the fibre pulp suspension when the fibre pulp suspension is supplied through the supply box to the vat. When the flow control element is arranged to act especially on the direction of at least part of the flow of the suspension, the flow of the suspension can be directed in the volume of the suspension in the vat or in the supply box into a direction, where the removal of air from the suspension is effective.

According to an embodiment, the flow control element is arranged to direct at least part of the flow of the fibre pulp suspension toward the surface of the fibre pulp suspension in the supply box or in the vat. The flow of the suspension being directed in a controlled manner to the surface of the suspension or close to the surface but underneath it allows the air in the suspension to leave the suspension easily and enter the free air above the surface of the suspension.

According to an embodiment, the flow control element is arranged to direct at least part of the flow of the fibre pulp suspension to be parallel to the surface of the fibre pulp suspension in the supply box or in the vat, whereby the air removal from the fibre pulp suspension is very effective.

### BRIEF DESCRIPTION OF THE DRAWINGS

In the following the invention will be described in greater detail by means of preferred embodiments with reference to the attached drawings, in which
Figure 1 shows schematically an end view of a disc filter,
Figure 2 shows schematically a side view of a part of a disc filter in cross-section,
Figure 3 shows schematically a perspective view of the part of the disc filter shown in Figure 2,
Figure 4 shows schematically an end view of a second disc filter in cross-section,
Figure 5 shows schematically a side view of the disc filter shown in Figure 4,
Figure 6 shows schematically an end view of a third disc filter in cross-section,
Figure 7 shows schematically an end view of a fourth disc filter in cross-section,
Figure 8 shows schematically an end view of a floating flow control element in cross-section,
Figure 9 shows schematically an end view of another floating flow control element in cross-section,
Figure 10 shows schematically a side view of a part of a fifth disc filter in cross-section and
Figure 11 shows schematically an end view of a sixth disc filter in cross-section.

### DETAILED DESCRIPTION OF THE INVENTION

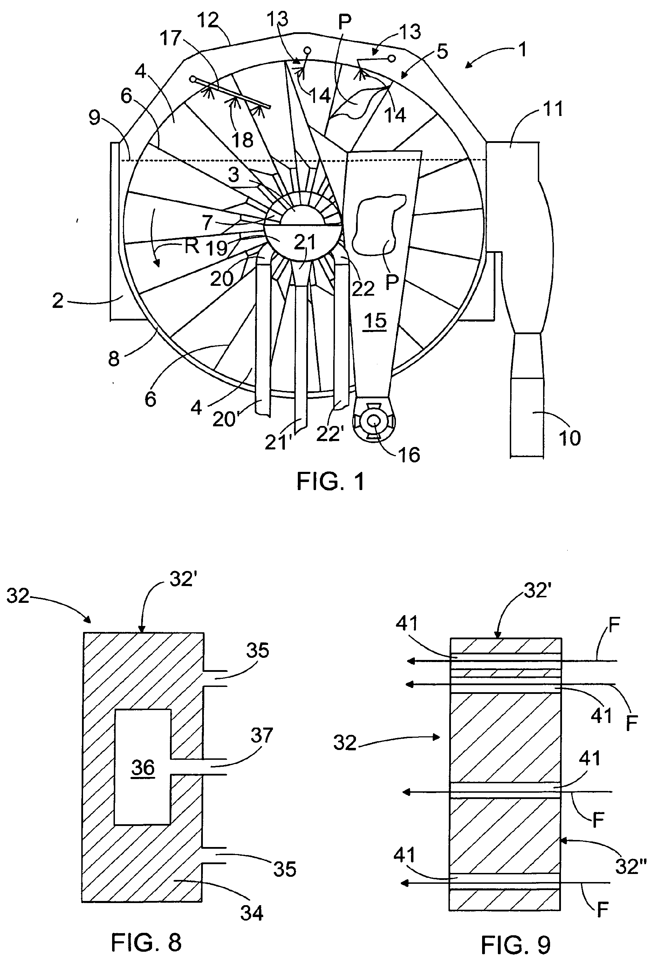

Figure 1 shows a schematic, partly sectional end view of a disc filter 1. The disc filter 1 comprises a bodywork 2 or a framework 2 and a rotatable axle 3, which may be supported to the bodywork 2 or to a separate supporting structures, such as bearing pedestals. The disc filter 1 further comprises, in the longitudinal direction of the axle 3, several successive filter discs 5, whereby each filter disc 4 is composed of several filter sectors 4 arranged next to each other in the direction of the periphery of the axle 3. The filter sector 4 comprises a supporting edge 6 and the area limited by the supporting edge 6 is provided by a cloth, for example, for forming a filtering surface of the filter sector 4, whereby the filtering surfaces of the filter sectors 4 together form a filtering surface of the filter disc 5. Filter sectors 4 are connected to filtrate channels 7 inside the axle 3. The axle 3 and the filter discs 5 are located in a vat 8 of the disc filter 1 so that at least the most part of the axle 3 and the area of the filter discs 5 are below the surface of the fibre pulp suspension in the vat 8. The surface of the fibre pulp suspension in the vat 8 is denoted by a dashed line and reference number 9. The fibre pulp suspension to be filtered is supplied into the vat 8 through a supply channel 10 and a supply box 11.

When the disc filter 1 is used, the axle 3 is rotated for example in the direction shown by arrow R, and a suction pressure or a suction effect acting on the fibre pulp suspension is created through the filter sectors 4, corresponding filtrate channels 7 being at that specific moment below the surface 9 of the fibre pulp suspension in the vat 8. As a result of this suction effect, a fibre layer P forms on the filtering surfaces of the filter sectors 4. As a result of this same suction effect, water contained in the fibre pulp suspension infiltrates through the fibre layer P as a filtrate inside the filter sector 4, whereby particles contained in the fibre pulp suspension remain on the fibre layer P.

The fibre layer P or thickened or dewatered fibre pulp P or retentate P formed on the surface of the filter sector 4 is removed when the filter sector 4 has entered above the surface 9 of the fibre pulp suspension during the rotation of the axle 3. Remove to the retentate P from the surface of the filter sector 4, the suction effect is interrupted or stopped, whereby the retentate P may fall of from the surface of the filter sector 4 by gravitation only. Typically, however, the removal of the retentate P is intensified by water sprays 14 provided by nozzles 13 arranged in the cover 12 of the disc filter 1. The removed retentate P falls into discharge chutes 15 between the filter discs 5. Below the discharge chutes 15 there is a screw conveyor 16 or some other conveyor for removing the retentate P out of the disc filter 1 for further processing. Figure 1 shows also a nozzle 17 which provides water sprays 18 for further purifying the surface of the filter sector 4 before it rotates back underneath the surface 9 of the fibre pulp suspension in the vat 8. The filtrate formed inside the filter sector 4 flows through a corresponding filtrate channel 7 to a filtrate valve 19 at the end of the axle 3. In Figure 1 the filtrate valve 19 comprises three discharge ports 20, 21 and 22 and corresponding discharge pipes 20', 21' and 22' for the discharge of the filtrates out of the disc filter 1. The general structure and operating principle of disc filters is known for a person skilled in the art and therefore they are not discussed here in more detail.

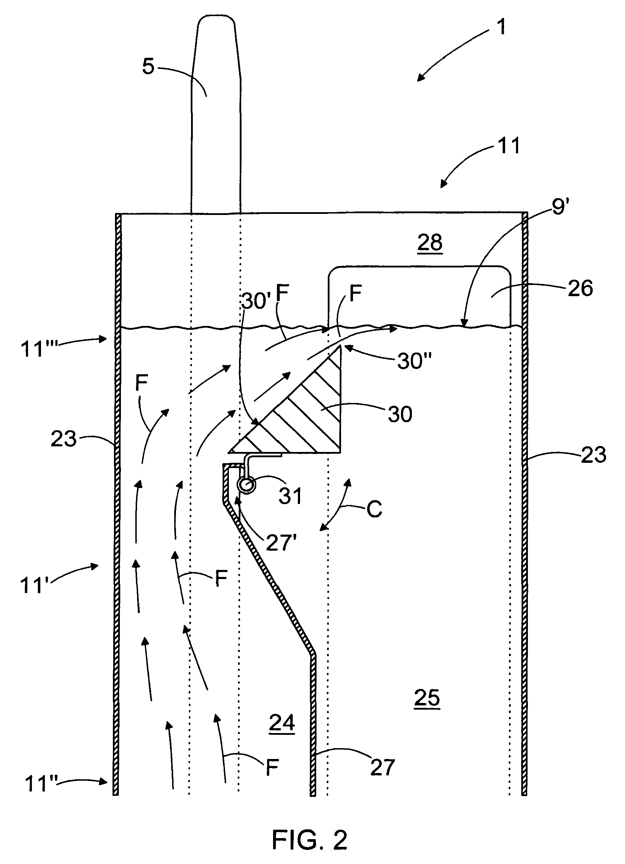

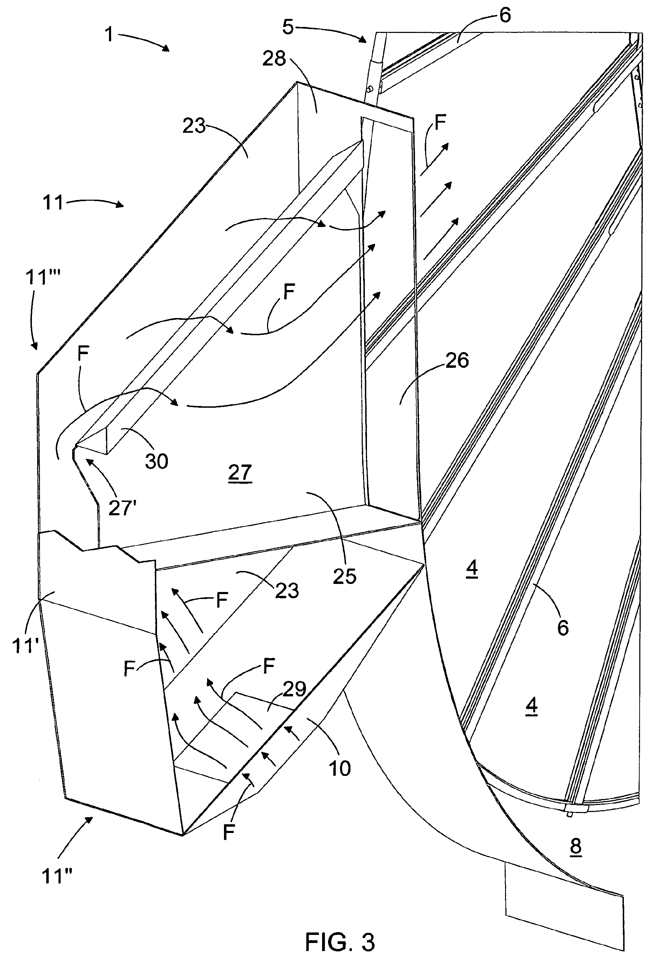

Figure 2 shows a schematic side view of a part of a disc filter 1 in cross-section and Figure 3 shows a schematic perspective view of the part of the disc filter 1 shown in Figure 2. As regards the filter disc 5 in Figure 3, only the supporting edges 6 of the filter sectors 4 in the filter disc 5 are shown in Figure 3, for the sake of clarity, the actual filtering surfaces of the filter sectors 4 being omitted.

In the embodiment of the disc filter 1 shown in Figures 2 and 3, the supply box 11 of the disc filter 1 consists of several portions 11' or modules 11' arranged successively relative to each other or one after the other in the longitudinal direction of the disc filter 1, i.e. in the longitudinal direction of the axle 3 of the disc filter 1. The portions 11' of the supply box 11 are separated from each other by separating walls 23. For the sake of clarity, Figures 2 and 3 disclose only one portion 11' or module 11' of the supply box 11.

Each portion 11' comprises an inlet chamber 24, which is arranged to receive the supply of the fibre pulp suspension from the supply channel 10 of the disc filter 1 at the lower part 11" of the portion 11'. The flow of the fibre pulp suspension in the disc filter 1 and especially in the supply box 11 and the vat 8 is denoted by arrows F. Each portion 11' comprises also an outlet chamber 25, wherefrom the fibre pulp suspension may flow to the vat 8 through a supply opening 26 in the wall 28 between the outlet chamber 25 and the vat 8, the supply opening 26 extending nearly over the whole height of the wall 28 between the supply box 11 and the vat 8. The outlet chamber 25 is thus in connection with the vat 8 so that the level of the surface 9' of the fibre pulp suspension in the outlet chamber 25 and the level of the surface 9 of the fibre pulp suspension in the vat 8 is the same. The portion 11' of the supply box 11 is provided with a separation wall 27 that partly separates the inlet chamber 24 and the outlet chamber 25 from each other so that at the lower part 11" of the portion 11' the inlet chamber 24 and the outlet chamber 25 are separated from each other but at the upper part 11"' of the portion 11' the inlet chamber 24 and the outlet chamber 25 are in connection with each other so that the level of the surface 9' of the fibre pulp suspension in the inlet chamber 24 and in the outlet chamber 25 is the same. This means that at the upper part 11"' of the portion 11' the inlet chamber 24 and the outlet chamber 25 substantially share the same volume. The separation wall 27 has thus a height that allows the fibre pulp suspension to flow from the inlet chamber 24 to the outlet chamber 25 in the upper part 11"' of the portion 11' of the supply box 11.

In the disc filter 1 shown in Figures 2 and 3 the fibre pulp suspension is supplied from the supply channel 10 of the disc filter 1 into the inlet chamber 24 through a flow opening 29 in the lower part 11" of the portion 11'. In the inlet chamber 24 the flow F of the fibre pulp suspension flows upwards towards the upper part 11"' of the portion 11', until the flow F arrives to the upper part 11"' of the portion 11' and may flow from the inlet chamber 24 to the outlet chamber 25. In the outlet chamber 25 the direction of the flow F turns about 90 degrees before it flows further to the vat 8 of the disc filter 1 through the supply opening 26 in the wall 28 between the portion 11' of the supply box 11 and the vat 8.

The portion 11' of the supply box 11 further comprises a floating flow control element 30, which is arranged in the portion 11' to act on the flow F of the fibre pulp suspension supplied through the supply box 11 to the vat 8. The floating flow control element 30 may hereinafter be called also a floating element 30, a flow control element 30 or just an element 30, for example. The flow control element 30 is arranged to act on the flow F of the fibre pulp suspension in the portion 11' in such a way that it is arranged to act on the direction of the flow F of the fibre pulp suspension, or at least on the part of the flow of the fibre pulp suspension, when the fibre pulp suspension flows from the direction of the inlet chamber 24 towards the outlet chamber 25. The element 30 is arranged to direct the flow F of the fibre pulp suspension in such a way that at least part of the fibre pulp suspension flow F flowing from the direction of the inlet chamber 24 towards the surface 9' in the outlet chamber 25 is directed to be parallel to the surface 9' of the fibre pulp suspension so that at least part of the fibre pulp suspension flow F flows parallel to the surface 9' close to the surface 9' or on the surface 9'. In the embodiment of the disc filter 1 of Figures 2 and 3 the element 30 is attached to or supported to the upper part 27' of the separation wall 27 although the exact attachment point of the element 30 may vary. Therefore the element 30 can also be attached to the separation wall 23 on the side of the inlet chamber 24, too.

When the fibre pulp suspension flow F arrives or comes to the surface 9' or near the surface 9' of the fibre pulp suspension in the portion 11', the air contained in the fibre pulp suspension supplied to the portion 11' of the supply box 11 comes into contact with free air above the surface 9' of the fibre pulp suspension, whereby at least some of the air contained in the fibre pulp suspension supplied to the portion 11' goes from the fibre pulp suspension to the free air above the surface 9' of the fibre pulp suspension. In a similar way, when the fibre pulp suspension flow F arrives or comes close to the surface 9' of the fibre pulp suspension in the portion 11', the air contained in the fibre pulp suspension supplied to the portion 11' of the supply box 11 may rise easier to the surface 9' of the fibre pulp suspension in the portion 11' and thus go from the fibre pulp suspension to the free air above the surface 9' of the fibre pulp suspension. This reduces the amount of air in the fibre pulp suspension that flows from the supply box 11' to the vat 8 already in the supply box 11 and thus reduces the amount of air in the fibre pulp suspension in the vat 8. This, in turn, increases the operating capacity of the disc filter 1. Also, because the fibre pulp suspension flow F flows in a controlled way to the surface 9' of the fibre pulp suspension or close to the surface 9' beneath it, no extra air in the supply of the fibre pulp suspension is formed to the vat, contrary to what happens in the prior art disc filter.

In the embodiment of Figures 2 and 3 the flow control element 30 is attached to the upper end 27' of the separation wall 27 by one or more pivotable joints 31. The joints 31 allow the flow control element 30 to turn about the joints 31 along a line of circular arch, indicated by arrow C in Figure 2, and thus change its position or alignment with respect to the surface 9' of the fibre pulp suspension. The floating flow control element 30 is thus movable and changes its position or alignment when the floating capacity or the buoyancy of the element 30 varies relative to the density of the fibre pulp suspension. The higher the buoyancy of the element 30, or in other words, the smaller the specific weight of the element 30 with respect to the density of the fibre pulp suspension, the higher the buoyant force acting on the element 30, whereby the right side of the element 30 or the end 30" of the controlling surface 30' of the element 30 will turn towards the surface 9' of the fibre pulp suspension. And vice versa, the smaller the buoyancy of the element 30, or in other words, the higher the specific weight of the element 30 with respect to the density of the fibre pulp suspension, the smaller the buoyant force acting on the element 30, whereby the end 30" of the controlling surface 30' of the element 30 will turn away from the surface 9' of the fibre pulp suspension. Additionally, the gravity effect and the flow effect of that flow over the element 30 also tries to turn the end 30" of the controlling surface 30' of the element 30 away from the surface 9' of the fibre pulp suspension. Preferably the element 30 is located in the portion 11' of the supply box 11 in such a position that it stays all the time below the surface 9' of the fibre pulp suspension in the portion 11'.

The cross-sectional shape of the flow control element 30 of Figures 2 and 3 is triangle. The length of the side of the triangle may be for example about 10 cm and the length of the flow control element 30 may be for example about 1 m. However, the dimensions of the element 30 may vary in many ways, as well as the shape of the cross-section of the element 30. The controlling surface 30' of the flow control element 30 is straight but it could also be convex, thus promoting the flow of the fibre pulp suspension to be directed to be parallel to the surface 9'. Furthermore, in the embodiment of Figures 2 and 3 the flow control element 30 is arranged to turn about the joints 31 when the buoyant force acting on the flow control element varies, although the flow control element 30 could also be supported to the separation wall 27 so that the flow control element 30 would move substantially linearly in a vertical or upright direction when the buoyant force acting on the element 30 varies.

As stated before, Figures 2 and 3 disclose only one portion 11' of the supply box 11 and, in practice, the supply box 11 comprises several portions 11' arranged successively with respect to each other in the longitudinal direction of the disc filter 1. Each portion 11' is arranged to supply fibre pulp suspension between two filter discs 5, or in other words, to supply fibre pulp suspension for two filtering surfaces in the disc filter 1, except the portions 11' at the ends of the disc filter 1 which are arranged to supply fibre pulp suspension only for those filtering surfaces which are facing the ends of the disc filter 1. The solution disclosed in Figures 2 and 3 also provides an even supply of suspension for all the filter discs.

In the embodiment of Figures 2 and 3 the floating flow control element 30 is arranged in the supply box 11 of the disc filter 1. In the following embodiments, however, the floating flow control element 30 is arranged on the side of the vat 8 next to the supply opening 26 in the wall 28 between the supply box 11 and the vat 8.

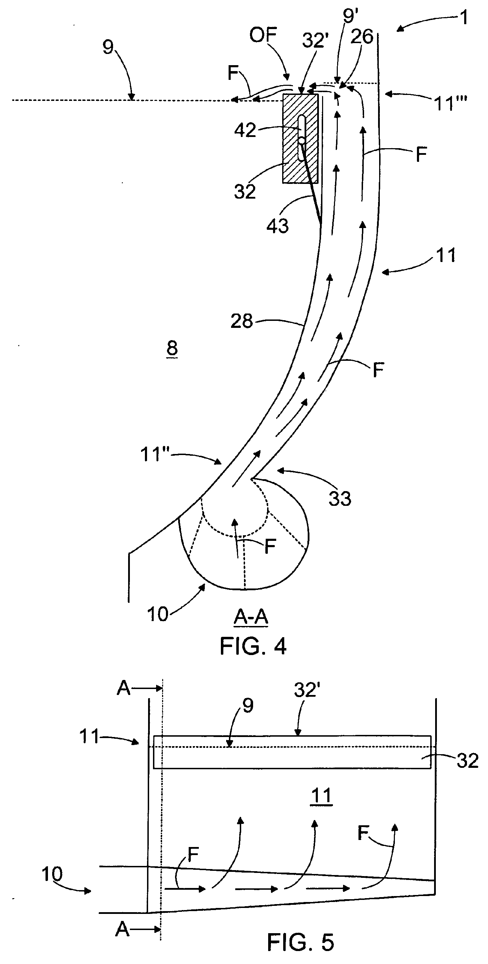

Figure 4 shows a schematic end view of a second disc filter 1 in cross-section along line A-A in Figure 5 and Figure 5 shows a schematic side view of the disc filter 1 shown in Figure 4. For the sake of clarity, only the supply channel 10, the supply box 11, the vat 8 and the flow control element 32 of the structure of the disc filter 1 are disclosed in Figures 4 and 5.

In the embodiment of Figures 4 and 5 the fibre pulp suspension is supplied to the lower part 11" of the supply box 11 through the supply channel 10 from one end of the disc filter 1. However, the fibre pulp suspension could be supplied to the supply box 11 also directly from the underside of the disc filter 1. The flow F of the fibre pulp suspension flows upwards in the supply box 11 and finally arrives to the upper part 11"' of the supply box 11, wherein the fibre pulp suspension flow F flows from the supply box 11 to the vat 8 through a supply opening 26. Next to the supply opening 26 on the side of the vat 8 there is a floating flow control element 32, over which at least part of the fibre pulp suspension flow F flows from the supply box 11 to the vat 8, i.e. there is an overflow OF of the fibre pulp suspension from the supply box 11 to the vat 8 over the floating flow control element 32. The amount of overflow OF of the fibre pulp suspension depends on the vertical position of the flow control element 32 in respect of the level of the fibre pulp suspension surface 9' in the supply box 11. That vertical position of the element 32, in turn, is dependent of the buoyant force acting on the element 32 in the vat 8.

When the fibre pulp suspension flow F flows from the supply box 11 to the vat 8 over the floating flow control element 32, the element 32 directs at least part of the fibre pulp suspension flow F from the supply box 11 downward towards to the surface 9 of the fibre pulp suspension in the vat 8, and at least partly parallel to the surface 9' in a controlled manner such that the fibre pulp suspension is not allowed to fall from high above against the surface 9, and hence a lot of extra air is not formed due to the supply of the fibre pulp suspension from the supply box 11 to the vat 8, which is contrary to what happens in the prior art disc filter. When the element 32 directs the fibre pulp suspension flow F towards the surface 9 of the fibre pulp suspension in the vat 8, the fibre pulp suspension from the supply box 11 flows to the surface 9 of the fibre pulp suspension or just underneath it, whereby at least some of the air contained in the fibre pulp suspension supplied to the vat may leave easily the suspension into the free air above the surface 9 of the suspension in the vat 8 in the same way as explained in connection with the embodiment of Figures 2 and 3. This, again, decreases the amount of air in the fibre pulp suspension in the vat 8 and thus increases the capacity of the disc filter.

In Figures 4 and 5 the floating flow control element 32 has a length substantially corresponding to the whole length of the supply box 11 but it is also possible that there are several shorter floating flow control elements 32 successively in the longitudinal direction of the disc filter 1. At the ends of the disc filter 1 there can be seen very small gaps between the flow control element 32 and the ends of the disc filter 1, as well as a small gap between the flow control element 32 and the wall 28 between the vat 8 and the supply box 11. These gaps allow the flow control element 32 to change its position in the upright direction so that the element 32 does not stick with the edges of the vat 8 and a small amount of fibre pulp suspension to be supplied into the vat may go from the supply box 11 to the vat 8 through these gaps. In order to keep the flow control element 32 in its position in the vat 8 horizontally, the flow control element 32 is attached to the vat 8, for example to the ends of the vat 8 or to the wall 28 as shown in Figure 4, with one or more attachment element that allow the flow control element 32 to move linearly in a vertical direction when the buoyant force acting on the element 32 varies or the surface 9 height in the vat 8 changes. This type of attachment element may for example comprise a guide bar 42 and a supporting rod 43 connected to the guide bar 33. Another example to support the element 32 sideways only is to wind at least one band horizontally around the elements 32 free faces and fasten the ends of the band to the wall 28. The flow control element 32 may also be attached to the disc filter 1 by one or more joints 31, whereby the joints 31 allow the flow control element 32 to turn about the joints 31 along a line of circular arch as shown in Figure 2.

In Figures 4 and 5 the cross-sectional shape of the flow control element 32 is substantially rectangle but the cross-sectional shape of the flow control element 32 in the embodiment of Figures 4 and 5 may also be triangle or some other shape. Thus for example the upper surface 32' of the element 32 could also be curved so that the upper surface 32' declines towards the vat 8. The flow control element 32 can also be positioned correspondingly to the supply box 11 instead of the vat 8, i.e. on the other side of the wall 28.

The supply box 11 in Figure 4 comprises, at the lower part 11" of the supply box 11, a restriction portion 33 which evens out the flow F of the fibre pulp suspension. After the restriction portion 33, the volume of the supply box 11 increases towards the upper part 11"' of the supply box 11, this lowering the speed of the flow F when the fibre pulp suspension flows upwards in the supply box 11. This also has an advantageous effect for the removal of air from the fibre pulp suspension so that when the speed of the fibre pulp suspension flow F decreases, the air in the fibre pulp suspension may rise upwards easier already in the supply box 11 and arrive to the surface 9' of the fibre pulp suspension in the supply box 11, whereby it may go from the fibre pulp suspension to the free air above the surface 9' of the fibre pulp suspension in the supply box 11.

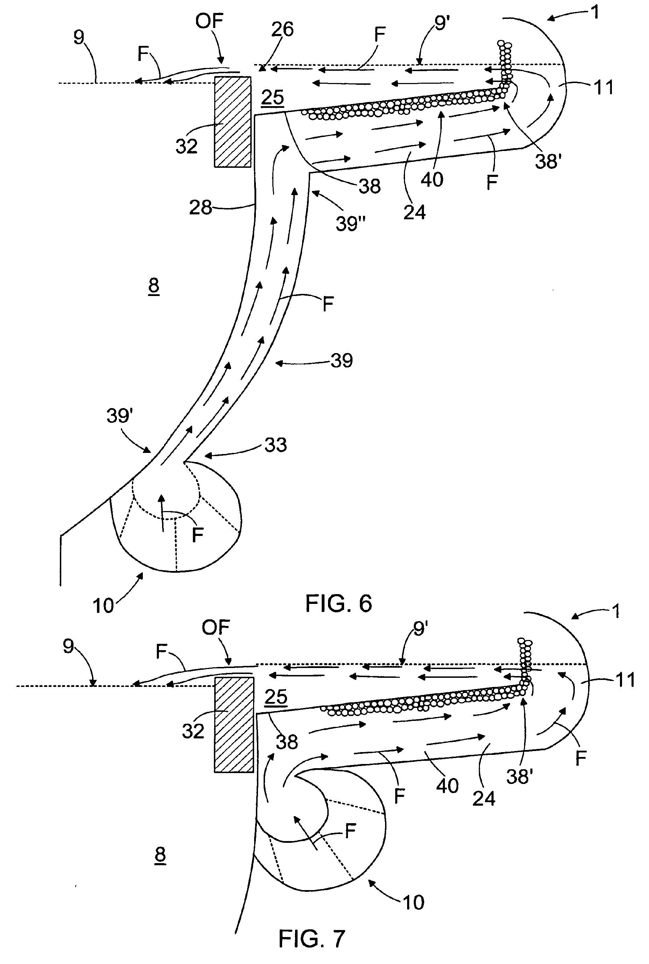

In the embodiments shown in Figures 4 and 5 and in the embodiments shown in Figures 6 and 7, too, the fibre pulp suspension flow F flows over the floating flow control element 32 when the position of the element 32 in the upright direction is limited or controlled mechanically, for example by attachment elements, so that the level of the surface 9' of the suspension in the supply box 11 is above the upper surface 32' of the element 32 and the level of the surface 9 of the suspension in the vat 8 is on the same level or below the upper surface 32' of the element 32. On the other hand, when the fibre pulp suspension flow F flows over the floating element 32, the element 32 goes downward due to the gravity effect and the flow effect of that flow over the element 32, whereby the element 32 takes a position where the element 32 is in equilibrium so that the buoyant force acting on the element 32 is equal to the force pressing the element 32 downward. The buoyancy of the flow control element 32 may be selected or controlled such that the element 32 takes a position where the upper surface 32' of the element 32 is at a desired level with respect to the level of the surface 9' of the suspension in the supply box 11.

The flow control element 32 can be solid or hollow. It can be manufactured of plastic, rubber or metal material or it can be a composite structure whereupon additionally wood or ceramic materials can be used. As a hollow element it can be filled with filling material such as water or other liquid and air with applicable proportions. The buoyancy of the element 32 may be adjusted for example by controlling the amount of filling material 34 in the element 32 through a port 35. The filling material is selected so that it has a lower density than the fibre pulp suspension. The buoyancy of the element 32 may also be adjusted by controlling the volume of an air space 36 in the element 32 by supplying more air to the air space 36 or by discharging air from the air space 36 through a port 37, whereby the air space 36 may comprise flexible walls. Also both methods may be used at the same time. The internal structure of the element 32 is shown schematically in Figure 8. The actual means for controlling the amount of filling material or the volume of air space are not disclosed in Figure 8 because they are evident for a skilled person. The flow control element 30 in Figures 2 and 3 may comprise similar internal structure, too. Preferably the buoyancy of the element 30, 32 is selected so that it tends to rise upward to the surface of the fibre pulp suspension, whereby there is no risk that the position of the flow control element would change randomly. The floating ability of the flow control element provides an easy way for the flow control element to change its position when the level of the surface of the fibre pulp suspension or the density, and thereby the flow behavior of the suspension, varies. Also the methods for varying the buoyancy of the element are very simple and therefore they also provide an easy way to change the position of the flow control element. By use of the flow control elements 30, 32 the fluctuation of air content in the fibre pulp suspension supply flow evens up and so does the fibre pulp suspension supply flow, too. As a consequence of this disc filter functions more stable resulting higher quality of filtrates and increase in production.

Figure 6 shows a schematic end view of a third disc filter 1 in cross-section. For the sake of clarity, only the supply channel 10, the supply box 11, the vat 8 and the floating flow control element 32 of the structure of the disc filter 1 are disclosed in Figure 6. In the embodiment of Figure 6 the supply box 11 comprises an inlet chamber 24 and an outlet chamber 25 partly separated from each other by a separation wall 38. The supply box 11 comprises also a flow channel 39, the first end 39' of which is connected to the supply channel 10 and the second end 39" of which is connected to the inlet chamber 24.

The fibre pulp suspension is supplied to the supply box 11 through the supply channel 10 at the lower part of the supply box 11. The flow F of the fibre pulp suspension flows upwards in the flow channel 39 and finally arrives to the inlet chamber 24 of the supply box 11. From the inlet chamber 24 the fibre pulp suspension flows onward to the outlet chamber 25 around the free end 38' of the separation wall 38. From the outlet chamber 25 the flow F of the suspension flows over the floating flow control element 32 as an overflow OF in a similar way as explained in connection with Figures 4 and 5, having the same decreasing effect on the amount of air or the air content in the fibre pulp suspension supplied to the vat 8 as explained in connection with Figures 4 and 5.

The flow channel 39 of the supply box 11 comprises at the first end 39' a restriction portion 33 which evens out the flow F of the fibre pulp suspension from the supply channel 10. After the restriction portion 33, the volume of the flow channel 39 increases towards the inlet chamber 24 of the supply box 11, this lowering the speed of the flow F when the suspension flows towards the inlet chamber 24. As stated earlier, this has an advantageous effect on the removal of air from the fibre pulp suspension so that when the speed of the suspension flow F decreases, the air in the fibre pulp suspension can rise easier upward inside the flow. This air, now, ends up to the surface of the separation wall 38, which is arranged to an almost transverse position in respect of the fibre pulp suspension flow F coming towards the inlet chamber 24. The separation wall 38 forms a kind of an air collector plate inside the supply box 11 so that the air is collected to the surface of the wall 38. This is shown in Figure 6 schematically by air bubbles 40, the size of which is exaggerated in Figure 6 for the sake of clarity. The separation wall 38 is put into a somewhat upward inclined position so that the air collected to the separation wall 38 can further rise upwards on the surface of the wall 38 and finally rise to the surface 9' of the fibre pulp suspension in the supply box 11 around the free end 38' and this way escape from the fibre pulp suspension to the free air in the disc filter 1.

Figure 7 shows a schematic end view of a fourth disc filter 1 in cross-section. The construction and functionality of the disc filter 1 in Figure 7 is similar to the construction and functionality of the disc filter 1 in Figure 6, despite the feature that the disc filter 1 in Figure 7 does not comprise any flow channel 39 in the supply box 11.

Figure 9 shows a schematic end view of another floating flow control element 32 in cross-section. The flow control element 32 of Figure 9 differs from the flow control elements 32 disclosed in the other figures in such a way that the flow control element 32 of Figure 9 comprises apertures 41 extending through the element 32. Because of these apertures 41 at least part of the flow F of the fibre pulp suspension from the supply box 11 to the vat 8 may go through these apertures 41. Part of the flow F of the fibre pulp suspension from the supply box 11 to the vat 8 may also go over the upper surface 32' of the flow control element 32.

The combined area of the apertures 41 in respect of the total area of the front surface 32" of the flow control element 32 may be selected to be constant or variable in the elevation direction of the front surface 32" of the element 32. When the combined area of the apertures 41 in respect of the total area of the front surface 32" of the element 32 is substantially constant, a substantially constant flow F of fibre pulp suspension through the apertures 41 takes place in the whole elevation direction of the front surface 32" of the element 32. This is advantageous especially when the fibre pulp suspension to be supplied into the disc filter does not contain very much air, whereby there is no need to supply substantially all the fibre pulp suspension to or close to the surface of the fibre pulp suspension. In this case the supply flow of fibre pulp suspension to the vat 8 is arranged to be done substantially evenly in the whole elevation direction of the front surface 32" of the element 32. This allows the element 32 to be used not only to act on the direction of the suspension flow but also on a general suspension flow distribution in such a way that the fibre pulp suspension supplied to the vat 8 flows very evenly to the vat 8, which provides an even flow of fibre pulp suspension also inside the vat 8, which also facilitates the exit of the air from the suspension in the vat 8. This intensifies the operation of the disc filter by improving the quality of the infiltrates and by increasing the production capacity of the disc filter 1.

The combined area of the apertures 41 in respect of the total area of the front surface 32" of the flow control element 32 may be selected to be variable in the elevation direction of the front surface 32" of the flow control element 32 for example in such a way that the number of the apertures 41 increases in the elevation direction of the front surface 32" of the element 32, as shown in Figure 9. In this case a bigger portion of the flow F of the fibre pulp suspension from the supply box 11 to the vat 8 takes place close to the surface of the fibre pulp suspension in the vat 8 or a little bit above it. This is advantageous when the fibre pulp suspension supplied to the disc filter 1 contains a lot of air, because air can escape from the suspension easier when the suspension to be supplied into the disc filter is supplied to the surface 9 of the fibre pulp suspension in the vat 8 or close to the surface 9, as explained earlier. In this way the air content in the fibre pulp suspension decreases and the fibre pulp suspension to be supplied to the disc filter 1 cannot go down deep under the surface 9 of the suspension in the vat 8 and thereby increase the air content of the fibre pulp suspension in the vat 8. It is also possible that the apertures 41 through the element 32 are directed so that they direct the fibre pulp suspension flow coming from the supply box 11 towards the surface 9 of the fibre pulp suspension in the vat 8. Same kind of apertures may also be arranged in the flow control element 30 disclosed in Figures 2 and 3.

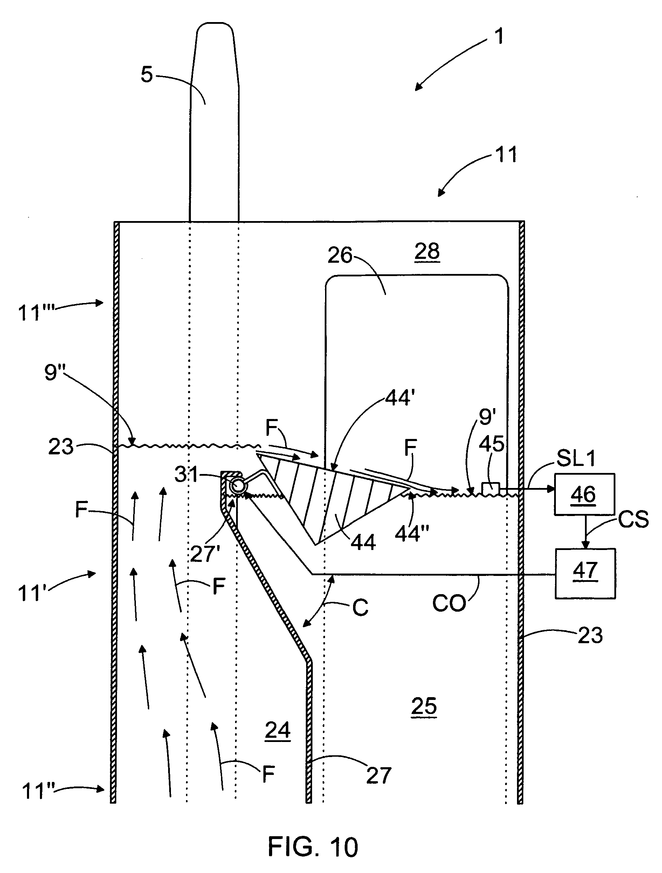

Figure 10 shows a schematic side view of a part of a fifth disc filter 1 in cross-section. The disc filter 1 in Figure 10 is substantially similar as the disc filter 1 in Figure 2 and like in Figure 2, Figure 10 shows only one portion 11' or module 11' of the supply box 11. The disc filter 1 of Figure 10 comprises in the portion 11' a sensing element 45 for measuring the level of the surface 9' of the fibre pulp suspension in the outlet chamber 25 of the supply box 11. A measurement signal SL1 corresponding the measured level of the surface 9' is transmitted to a control unit 46. On the basis of the measurement signal SL1 the control unit 46 is arranged to provide a control signal CS to an actuator 47, which is arranged to act on the joint 31 or on flow control element 44 such that the flow control element 44 may turn about the joints 31 along a line of circular arch, indicated by arrow C, the flow control element 44 thus being movable. The connection between the actuator 47 and the joint 31 or the flow control element 44 is indicated very schematically by arrow CO.

In the embodiment of Figure 10 the position or alignment of the flow control element 44 and hence the position or alignment of the controlling surface 44' of the element 44 and the end 44" of the controlling surface 44' may be adjusted on the basis of the measured level of the surface 9' of the fibre pulp suspension in the outlet chamber 25 of the supply box 11. Because in the embodiment of Figure 10 the position of the flow control element 44 is adjusted on the basis of the measured level of the surface 9' of the fibre pulp suspension, the flow control element 44 in the embodiment of Figure 10 typically do not have any floating capability. However, the solution according to Figure 10 may also be used for adjusting the position of floating flow control element 30 too. In the disc filter 1 according to Figure 10 each portion 11' of the supply box 11 may have a control circuit of its own. However, if it may be assumed that the level of the surface 9' of the fibre pulp suspension is substantially the same in every portion 11' of the supply box 11, it is also possible that the position of flow control elements 44 in every portion 11' of the supply box 11 is adjusted by using only one single control circuit.

In Figure 10 the surface 9" of the fibre pulp suspension in the inlet chamber 24 is on the higher level than the surface 9' of the fibre pulp suspension in the outlet chamber 25. The separation wall 27 and the flow control element 44 together form an overflow step, over which the flow of the suspension goes from the inlet chamber 24 to the outlet chamber 25. When the fibre pulp suspension flow F flows from the inlet chamber 24 to the outlet chamber 25 over the flow control element 44, the flow control element 44 directs at least part of the flow from the inlet chamber 24 downward towards to the surface 9' of the fibre pulp suspension in the outlet chamber 25 in the controlled manner such that the fibre pulp suspension is not allowed to fall from high above against the surface 9', and hence a lot of extra air is not formed due to the supply of the fibre pulp suspension. The flow control element 44 directs the flow at least partly to be parallel to the surface 9' of the fibre pulp suspension so that the fibre pulp suspension flow F entering to the outlet chamber 25 flows at least partly parallel to the surface 9', because the controlling surface 44' of the flow control element 44 is inclined or sloped downward towards the outlet chamber 25. The controlling surface 44' of the flow control element 44 is straight but it could also be concave, thus further promoting the flow of the fibre pulp suspension to be directed to be parallel to the surface 9'.

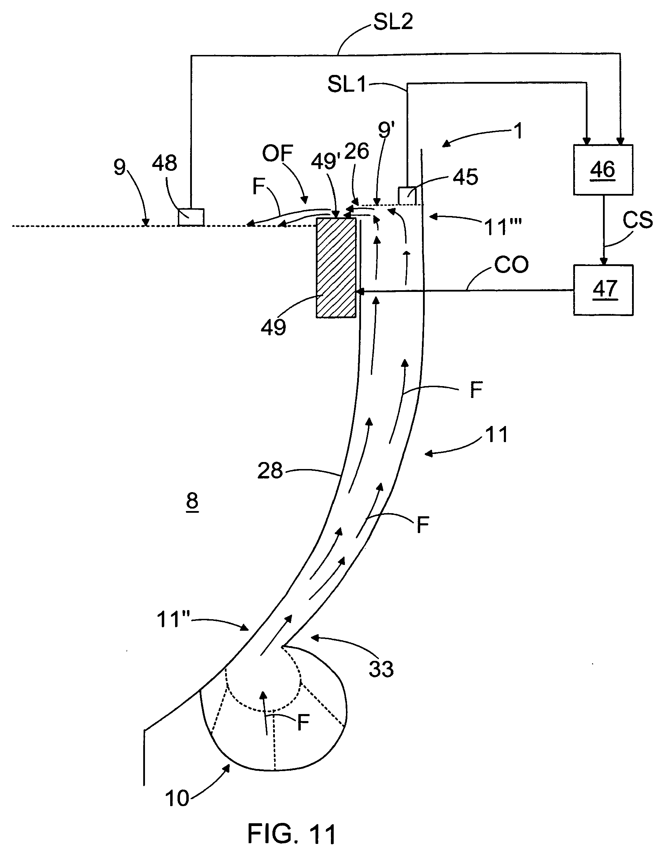

Figure 11 shows a schematic side view of a part of a sixth disc filter 1 in cross-section. The disc filter 1 in Figure 11 is substantially similar as the disc filter 1 in Figure 4. The disc filter 1 of Figure 11 comprises a sensing element 45 for measuring the level of the surface 9' of the fibre pulp suspension in the supply box 11. A measurement signal SL1 corresponding the measured level of the surface 9' of the fibre pulp suspension in the supply box 11 is transmitted to a control unit 46. The disc filter 1 of Figure 11 comprises also a sensing element 48 for measuring the level of the surface 9 of the fibre pulp suspension in the vat 8. A measurement signal SL2 corresponding the measured level of the surface 9 of the fibre pulp suspension in the vat 8 is also transmitted to a control unit 46. On the basis of the measurement signals SL1 and SL2 the control unit 46 is arranged to provide a control signal CS to an actuator 47, which is arranged to act on the flow control element 49 such that the flow control element 49 may change its position in a vertical direction. The flow control element 49 is thus movable. The connection between the actuator 47 and the flow control element 49 is indicated very schematically by arrow CO.

In the embodiment of Figure 11 the position of the flow control element 49 and hence the position of the upper surface 49' of the flow control element 49 may be adjusted in respect of the surface 9 of the fibre pulp suspension in the vat 8 and the surface 9' of the fibre pulp suspension in the supply box 11 on the basis of the measured levels of the surfaces 9 and 9'. Because in the embodiment of Figure 11 the position of the flow control element 49 is adjusted of the basis of the measured levels of the surfaces 9 and 9', the flow control element 49 in the embodiment of Figure 11 typically do not have any floating capability. However, the solution according to Figure 11 may also be used for adjusting the position of floating flow control element 32 too.It will be obvious to a person skilled in the art that, as the technology advances, the inventive concept can be implemented in various ways. The invention and its embodiments are not limited to the examples described above but may vary within the scope of the claims. Therefore the embodiments of the flow control elements 30 and 44 shown in Figures 2, 3, and 10 may also be utilized in the embodiments of Figures 4 - 9 and 11 and the embodiments of the flow control elements 32 and 49 shown in Figures 4 - 9 and 11 may also be utilized in the embodiments of Figures 2, 3 and 10.

## Claims

1. A disc filter (1) comprising a supply box (11) and a vat (8), **characterized in that** the disc filter (1) comprises at least one floating flow control element (30, 32) for directing at least part of the flow (F) of the fibre pulp suspension to the surface (9, 9') or close to the surface (9, 9') of fibre pulp suspension in the supply box (11) or in the vat (8), which flow control element (30, 32) is supported to a separation wall (27) between an inlet chamber (24) and an outlet chamber (25) of the supply box (11) or to a wall (28) between the vat (8) and the supply box (11) and arranged to turn about a joint (31) along a line of circular arch or move linearly in a vertical direction and comprises a surface (30', 32') over which at least part of the flow (F) of the fibre pulp suspension flows.

2. A disc filter according to claim 1, **characterized in that** the flow control element (30, 32) is arranged to direct at least part of the flow (F) to be parallel to the surface (9') of fibre pulp suspension in the supply box (11) or to the surface (9) of the fibre pulp suspension in the vat (8) so that the flow (F) of fibre pulp suspension to the supply box (11) or to the vat (8) flows at least partly parallel to the surface (9, 9') of fibre pulp suspension in the supply box (11) or in the vat (8).

3. A disc filter according to claim 1, **characterized in that** the flow control element (30, 32) is arranged in connection with the separation wall (27) or the wall (28) between the vat (8) and a supply box (11) with at least one pivotable joint (31), whereby the flow control element (30, 32) is allowed to change its position or alignment by turning about the joint (31).

4. A disc filter according to any one of the previous claims, **characterized in that** the flow control element (30) has a cross-sectional shape of a triangle.

5. A disc filter according to any one of previous claims, **characterized in that** the flow control element (30, 32) is arranged in the vat (8).

6. A disc filter according to claim 5, **characterized in that** the flow control element (30, 32) is arranged in connection with the vat (8) with at least one attachment element which allows the flow control element (30, 32) to change its position substantially linearly in an upright direction in the vat (8).

7. A disc filter according to claim 1, **characterized in that** the floating flow control element (30, 32) comprises filling material (34) and an air space (36), and that the buoyancy of the floating flow control element (30, 32) is adjusted by controlling the amount of filling material (34) and/or the volume of the air space (36).

8. A disc filter according to any one of previous claims, **characterized in that** the flow control element (32) comprises apertures (41) through which at least part of the flow (F) of the fibre pulp suspension flows when the flow control element (32) is arranged to direct at least part of the flow (F) of the fibre pulp suspension.

9. A method for supplying fibre pulp suspension into a disc filter (1) comprising a supply box (11) and a vat (8), in which method the fibre pulp suspension is supplied to the vat (8) through the supply box (11), **characterized by**
directing at least part of the flow (F) of the fibre pulp suspension to the surface (9, 9') or close to the surface (9, 9') of fibre pulp suspension in the supply box (11) or in the vat (8) with at least one floating flow control element (30, 32) which is supported to a separation wall (27) between an inlet chamber (24) and an outlet chamber (25) of the supply box (11) or to a wall (28) between the vat (8) and the supply box (11) and arranged to turn about a joint (31) along a line of circular arch or move linearly in a vertical direction and comprises a surface (30', 32') over which at least part of the flow (F) of the fibre pulp suspension flows.

10. A method according to claim 9, **characterized by** directing at least part of the flow (F) of the fibre pulp suspension to be parallel to the surface (9') of fibre pulp suspension in the supply box (11) or to the surface (9) of the fibre pulp suspension in the vat (8) so that the flow (F) of fibre pulp suspension to the supply box (11) or to the vat (8) flows at least partly parallel to the surface (9, 9') of fibre pulp suspension in the supply box (11) or in the vat (8).

11. A method according to claim 9, **characterized in that** the floating flow control element (30, 32) comprises filling material (34) and/or an air space (36), whereby the buoyancy of the floating flow control element (30, 32) is adjusted by controlling the amount of filling material (34) and/or the volume of the air space (36).

## Patentansprüche

1. Scheibenfilter (1), umfassend einen Zufuhrkasten (11) und einen Bottich (8), **dadurch gekennzeichnet, dass** das Scheibenfilter (1) zumindest ein schwimmendes Stromsteuerelement (30, 32) zum Lenken von zumindest einem Teil des Stroms (F) der Faserpulpensuspension zur Oberfläche (9, 9') oder nahe an die Oberfläche (9, 9') von Faserpulpensuspension im Zufuhrkasten (11) oder im Bottich (8) umfasst, wobei das Stromsteuerelement (30, 32) an einer Trennwand (27) zwischen einer Einlasskammer (24) und einer Auslasskammer (25) des Zufuhrkastens (11) oder an einer Wand (28) zwischen dem Bottich (8) und dem Zufuhrkasten (11) gestützt ist und zum Drehen um ein Gelenk (31) entlang einer Kreisbogenlinie oder zum linearen Bewegen in einer vertikalen Richtung angeordnet ist und eine Fläche (30', 32') umfasst, über die zumindest ein Teil des Stroms (F) der Faserpulpensuspension strömt.

2. Scheibenfilter nach Anspruch 1, **dadurch gekennzeichnet, dass** das Stromsteuerelement (30, 32) zum derartigen Lenken von zumindest einem Teil des Stroms (F), dass er parallel zur Oberfläche (9') der Faserpulpensuspension im Zufuhrkasten (11) oder zur Oberfläche (9) der Faserpulpensuspension im Bottich (8) ist, angeordnet ist, sodass der Strom (F) von Faserpulpensuspension zum Zufuhrkasten (11) oder zum Bottich (8) zumindest teilweise parallel zur Oberfläche (9, 9') der Faserpulpensuspension im Zufuhrkasten (11) oder im Bottich (8) strömt.

3. Scheibenfilter nach Anspruch 1, **dadurch gekennzeichnet, dass** das Stromsteuerelement (30, 32) in Verbindung mit der Trennwand (27) oder der Wand (28) zwischen dem Bottich (8) und einem Zufuhrkasten (11) mit zumindest einem Drehgelenk (31) angeordnet ist, wobei ermöglicht ist, dass das Stromsteuerelement (30, 32) seine Position oder Ausrichtung durch Drehen um das Gelenk (31) ändert.

4. Scheibenfilter nach einem der vorhergehenden Ansprüche, **dadurch gekennzeichnet, dass** das Stromsteuerelement (30) eine Querschnittsform eines Dreiecks aufweist.

5. Scheibenfilter nach einem der vorhergehenden Ansprüche, **dadurch gekennzeichnet, dass** das Stromsteuerelement (30, 32) im Bottich (8) angeordnet ist.

6. Scheibenfilter nach Anspruch 5, **dadurch gekennzeichnet, dass** das Stromsteuerelement (30, 32) in Verbindung mit dem Bottich (8) mit zumindest einem Anbringungselement angeordnet ist, das es ermöglicht, dass das Stromsteuerelement (30, 32) seine Position im Wesentlichen linear in einer Aufwärtsrichtung im Bottich (8) ändert.

7. Scheibenfilter nach Anspruch 1, **dadurch gekennzeichnet, dass** das schwimmende Stromsteuerelement (30, 32) Füllmaterial (34) und einen Luftraum (36) umfasst, und dass der Auftrieb des schwimmenden Stromsteuerelements (30, 32) durch Steuern der Menge an Füllmaterial (34) und/oder des Volumens des Luftraums (36) angepasst wird.

8. Scheibenfilter nach einem der vorhergehenden Ansprüche, **dadurch gekennzeichnet, dass** das Stromsteuerelement (32) Öffnungen (41) umfasst, durch die zumindest ein Teil des Stroms (F) der Faserpulpensuspension strömt, wenn das Stromsteuerelement (32) zum Lenken von zumindest einem Teil des Stroms (F) der Faserpulpensuspension angeordnet ist.

9. Verfahren zum Zuführen von Faserpulpensuspension in ein Scheibenfilter (1), das einen Zufuhrkasten (11) und einen Bottich (8) umfasst, wobei die Faserpulpensuspension in dem Verfahren dem Bottich (8) durch den Zufuhrkasten (11) zugeführt wird, **gekennzeichnet durch**
Lenken von zumindest einem Teil des Stroms (F) der Faserpulpensuspension zur Oberfläche (9, 9') oder nahe an die Oberfläche (9, 9') von Faserpulpensuspension im Zufuhrkasten (11) oder im Bottich (8) mit einem schwimmenden Stromsteuerelement (30, 32), das an einer Trennwand (27) zwischen einer Einlasskammer (24) und einer Auslasskammer (25) des Zufuhrkastens (11) oder an einer Wand (28) zwischen dem Bottich (8) und dem Zufuhrkasten (11) gestützt ist und zum Drehen um ein Gelenk (31) entlang einer Kreisbogenlinie oder zum linearen Bewegen in einer vertikalen Richtung angeordnet ist und eine Fläche (30', 32') umfasst, über die zumindest ein Teil des Stroms (F) der Faserpulpensuspension strömt.

10. Verfahren nach Anspruch 9, **gekennzeichnet durch** derartiges Lenken von zumindest einem Teil des Stroms (F) der Faserpulpensuspension, dass er parallel zur Oberfläche (9') der Faserpulpensuspension im Zufuhrkasten (11) oder zur Oberfläche (9) der Faserpulpensuspension im Bottich (8) ist, sodass der Strom (F) von Faserpulpensuspension zum Zufuhrkasten (11) oder zum Bottich (8) zumindest teilweise parallel zur Oberfläche (9, 9') der Faserpulpensuspension im Zufuhrkasten (11) oder im Bottich (8) strömt.

11. Verfahren nach Anspruch 9, **dadurch gekennzeichnet, dass** das schwimmende Stromsteuerelement (30, 32) Füllmaterial (34) und einen Luftraum (36) umfasst, wobei der Auftrieb des schwimmenden Stromsteuerelements (30, 32) durch Steuern der Menge an Füllmaterial (34) und/oder des Volumens des Luftraums (36) angepasst wird.

## Revendications

1. Filtre à disque (1) comprenant une boîte d'alimentation (11) et une cuve (8), **caractérisé en ce que** le filtre à disque (1) comprend au moins un élément flottant de commande de flux (30, 32) pour diriger au moins une partie du flux (F) de la suspension de pâte fibreuse vers la surface (9, 9') ou près de la surface (9, 9') de la suspension de pâte fibreuse dans la boîte d'alimentation (11) ou dans la cuve (8), lequel élément de commande de flux (30, 32) est supporté sur une paroi de séparation (27) entre une chambre d'entrée (24) et une chambre de sortie (25) de la boîte d'alimentation (11) ou sur une paroi (28) entre la cuve (8) et la boîte d'alimentation (11) et agencé pour tourner autour d'un joint (31) le long d'une ligne d'arc circulaire ou se déplacer linéairement dans une direction verticale et comprend une surface (30', 32') sur laquelle au moins une partie du flux (F) de la suspension de pâte fibreuse s'écoule.

2. Filtre à disque selon la revendication 1, **caractérisé en ce que** l'élément de commande de flux (30, 32) est agencé pour diriger au moins une partie du flux (F) pour être parallèle à la surface (9') de la suspension de pâte fibreuse dans la boîte d'alimentation (11) ou à la surface (9) de la suspension de pâte fibreuse dans la cuve (8) de sorte que le flux (F) de la suspension de pâte fibreuse vers la boîte d'alimentation (11) ou la cuve (8) s'écoule au moins en partie parallèlement à la surface (9, 9') de la suspension de pâte fibreuse dans la boîte d'alimentation (11) ou dans la cuve (8).

3. Filtre à disque selon la revendication 1, **caractérisé en ce que** l'élément de commande de flux (30, 32) est agencé en connexion avec la paroi de séparation (27) ou la paroi (28) entre la cuve (8) et une boîte d'alimentation (11) avec au moins un joint pivotant (31), de sorte que l'élément de commande de flux (30, 32) est autorisé à changer sa position ou alignement en tournant autour du joint (31).

4. Filtre à disque selon n'importe laquelle des revendications précédentes, **caractérisé en ce que** l'élément de commande de flux (30) a une forme en coupe transversale d'un triangle.

5. Filtre à disque selon n'importe laquelle des revendications précédentes, **caractérisé en ce que** l'élément de commande de flux (30, 32) est agencé dans la cuve (8).

6. Filtre à disque selon la revendication 5, **caractérisé en ce que** l'élément de commande de flux (30, 32) est agencé en connexion avec la cuve (8) avec au moins un élément d'attachement qui permet à l'élément de commande de flux (30, 32) de changer sa position sensiblement linéairement dans une direction verticale dans la cuve (8).

7. Filtre à disque selon la revendication 1, **caractérisé en ce que** l'élément flottant de commande de flux (30, 32) comprend une matière de remplissage (34) et un espacement d'air (36), et **en ce que** la flottabilité de l'élément flottant de commande de flux (30, 32) est ajustée en maîtrisant la quantité de matière de remplissage (34) et/ou le volume de l'espacement d'air (36).

8. Filtre à disque selon n'importe laquelle des revendications précédentes, **caractérisé en ce que** l'élément de commande de flux (32) comprend des ouvertures (41) à travers lesquelles au moins une partie du flux (F) de la suspension de pâte fibreuse s'écoule lorsque l'élément de commande de flux (32) est agencé pour diriger au moins une partie du flux (F) de la suspension de pâte fibreuse.

9. Procédé pour fournir une suspension de pâte fibreuse dans un filtre à disque (1) comprenant une boîte d'alimentation (11) et une cuve (8), procédé dans lequel la suspension de pâte fibreuse est fournie à la cuve (8) par l'intermédiaire de la boîte d'alimentation (11), **caractérisé par**
l'orientation d'au moins une partie du flux (F) de la suspension de pâte fibreuse vers la surface (9, 9') ou près de la surface (9, 9') de la suspension de pâte fibreuse dans la boîte d'alimentation (11) ou dans la cuve (8) avec au moins un élément flottant de commande de flux (30, 32) qui est supporté sur une paroi de séparation (27) entre une chambre d'entrée (24) et une chambre de sortie (25) de la boîte d'alimentation (11) ou sur une paroi (28) entre la cuve (8) et la boîte d'alimentation (11) et agencé pour tourner autour d'un joint (31) le long d'une ligne d'arc circulaire ou se déplacer linéairement dans une direction verticale et comprend une surface (30', 32') sur laquelle au moins une partie du flux (F) de la suspension de pâte fibreuse s'écoule.

10. Procédé selon la revendication 9, **caractérisé par** l'orientation d'au moins une partie du flux (F) de la suspension de pâte fibreuse pour être parallèle à la surface (9') de la suspension de pâte fibreuse dans la boîte d'alimentation (11) ou à la surface (9) de la suspension de pâte fibreuse dans la cuve (8) de sorte que le flux (F) de suspension de pâte fibreuse vers la boîte d'alimentation (11) ou vers la cuve (8) s'écoule au moins en partie parallèlement à la surface (9, 9') de la suspension de pâte fibreuse dans la boîte d'alimentation (11) ou dans la cuve (8).

11. Procédé selon la revendication 9, **caractérisé en ce que** l'élément flottant de commande de flux (30, 32) comprend une matière de remplissage (34) et/ou un espacement d'air (36), de sorte que la flottabilité de l'élément flottant de commande de flux (30, 32) est ajustée en maîtrisant la quantité de matière de remplissage (34) et/ou le volume de l'espacement d'air (36).
